# EUROPEAN PATENT SPECIFICATION

(11) **EP 2 873 897 B1**
(45) Date of publication and mention of the grant of the patent: **14.06.2017**
(21) Application number: 14445005.3
(22) Date of filing: 11.11.2014
(51) Int. Cl.: F16L 1/12, H02G 9/02

(54) **Concrete element for protecting one or several cables and/or pipelines in an underwater installation**
Betonelement für den Schutz eines oder mehreren Kabeln und/oder Rohrleitungen in einer Unterwasserinstallation
Élément de béton destiné à protéger une ou plusieurs câbles et/ou pipelines dans une installation sous-marine

(30) Priority: 14.11.2013 SE 1300706
(43) Date of publication of application: 20.05.2015
(73) Proprietor: Helgesson, Björn, 45493 Brastad (SE); Helgesson, Tony, 454 93 Brastad (SE); Helgesson, Martin, 454 93 Brastad (SE); Helgesson, Aron, 454 93 Brastad (SE)
(72) Inventor: Helgesson, Björn, 45493 Brastad (SE); Helgesson, Tony, 454 93 Brastad (SE); Helgesson, Martin, 454 93 Brastad (SE); Helgesson, Aron, 454 93 Brastad (SE)
(74) Representative: Sandstedt, Jonas Sven James

(56) References cited:
- WO-A1-2009/136834
- US-A- 5 052 859
- US-A- 5 193 937
- US-A- 5 443 329

## Description

### TECHNICAL FIELD

The present invention relates to a concrete element for protecting one or several cables and/or pipelines in an underwater installation.

### BACKGROUND OF THE INVENTION

Underwater installations, such as cables and pipelines without any overlying protection, are at great risk of being damaged or displaced out of position by wave movements, water currents, or fishing implements, e.g. trawls, dragged over them. It has therefore become more and more common to cover underwater installations with suitably designed protective elements, which are laid in a long row on top of the underwater installation. The protective elements are advantageously laid at the same time as the underwater installation itself.

Different types of protective elements for underwater installations are previously known. Some previously known types of such protective elements are described in WO 2005/078325 A1, US 6 349 808 B1, US 4 242 010 and WO 2009/136834 A1.

Protective elements of reinforced concrete have proved to work well, as far as stability and protective effect for underlying cables and/or pipelines are concerned, and generally require no covering with gravel or the like.

However, it has been found that there is a certain risk that cables and/or pipelines which are to be part of an underwater installation are damaged due to wear or chafing against the concrete element in connection with the laying operation, or by wear or chafing against the concrete element, the surface of the bottom, rocks, or other objects underneath the concrete element due to strong wave movements and/or water currents acting on the laid underwater installation after the laying operation.

It has also been found that electrical or optical conductors in cables which are to be part of underwater installations are particularly sensitive to bending fatigue caused by wave movements or other forces acting on the cables after the laying operation, wherein such a bending fatigue may eventually cause conductor breakages, which are very expensive to repair and can cause interruptions in the electricity supply and/or communication occurring via the underwater cables, which can result in great costs and other serious consequences for important societal functions, companies and private persons.

Patent document US 5,193,937 discloses a concrete element comprising all the features of the preamble of claim 1.

### SUMMARY OF THE INVENTION

Accordingly, a first object of the present invention is to provide a concrete element which considerably reduces the risk of one or several cables and/or pipelines in an underwater installation being damaged by wear or chafing against the concrete element in connection with the laying operation, and which furthermore considerably reduces the risk of said cables and/or pipelines being damaged by wear or chafing against the concrete element, the surface of the bottom, rocks, or other objects underneath the concrete element in the event that the underwater installation is subjected to strong wave movements or water currents after the laying operation.

This first object is achieved by means of a concrete element for protecting one or several cables and/or pipelines in an underwater installation according to claim 1, which comprises a bottom side providing a longitudinal cavity for receiving said one or several cables and/or pipelines when laying the concrete element, wherein at least one resilient spacing means has been designed and applied in such a way on the concrete element, before the laying of the concrete element, that an abutment portion of said resilient spacing means extends inside the longitudinal cavity at least a portion of the distance between a first and a second longitudinal side of the concrete element, wherein said resilient spacing means is/are intended to pass between said bottom side of the concrete element and said one or several cables and/or pipelines after the laying of the concrete element, and wherein said resilient spacing means has/have an elongated shape and exhibits/exhibit a first end having a first attachment means for attachment to a first anchor point on the first longitudinal side of the concrete element and second end having a second attachment means for attachment to a second anchor point on the second longitudinal side of the concrete element.

The application of one or several resilient spacing means on the concrete element according to the invention provides a very simple and cost-effective way of considerably reducing the risk of damages to expensive, and usually very important, underwater installations, both during and after the laying operation. Examples of such installations are underwater cables for electric power transmission and underwater cables for different forms of communication, which are very expensive to manufacture and lay out, and which, if damaged, in the worst case can cause a prolonged interruption in the energy supply and/or communication between authorities, companies and/or private users in different countries, or even on different continents.

A second object of the present invention is to provide a concrete element which minimizes the risk of said cables and/or pipelines being damaged by wear or chafing against the concrete element, the surface of the bottom, rocks, or other objects underneath the concrete element, and which in particular minimizes the risk of electrical or optical conductors of one or several cables eventually suffering bending fatigue caused by wave movements or other forces acting on the cable or cables after the laying of the concrete element in an underwater installation.

This second object is achieved by means of a concrete element for protecting an underwater installation according to claim 2, wherein the resiliency, degree of pretensioning, if any, and dimensioning of said resilient spacing means are chosen such that said resilient spacing means will exert a compressive force higher than 300 N/m, as measured on a cable or pipeline of 75 mm outer diameter, and expressed as force measured in N exerted on the cable or pipeline divided by the length in metres of the cable or pipeline on which said spacing means exerts the force with the concrete element resting on a flat support surface.

By designing resilient spacing means according to the invention in such a way that they will exert a compressive force higher than 300 N/m on the pipelines and/or cables which are to be protected after the laying operation, it is ensured that the pipelines and/or cables will not move after the laying operation, so that the risk of interruptions in the fluid flow conveyed by the pipelines is minimized, and so that, in particular, the risk of interruptions in power transmission and/or communication due to bending fatigue of the electrical or optical conductors of the cable is minimized.

A third object of the present invention is to provide a concrete element, which eliminates the risk of said cables and/or pipelines being damaged by excessive compressive forces exerted by said resilient spacing means of the concrete element.
This third object is achieved by means of a concrete element for protecting an underwater installation according to claim 3, wherein the resiliency, degree of pretensioning, if any, and dimensioning of said resilient spacing means are chosen such that said resilient spacing means will exert a compressive force below 5000 N/m, as measured on a cable or pipeline of 75 mm outer diameter, and expressed as force measured in N exerted on the cable or pipeline divided by the length in metres of the cable or pipeline on which said spacing means exerts the force with the concrete element resting on a flat support surface. By making it possible through measurements to ensure that the resilient spacing means applied on concrete elements according to the invention are designed in such a way that they will exert a compressive force below 5000 N/m on pipelines and/or cables which are to be protected after the laying of the concrete element, the risk of pipelines and/or cables being damaged by excessive compressive forces exerted by the resilient spacing means is eliminated.

Further objects and advantages of the invention and the features making it possible to achieve these objects and advantages will be apparent from the following description.

### BRIEF DESCRIPTION OF THE DRAWINGS

In the following, the invention will be described through a number of different embodiments with reference to the attached drawings, in which
Figure 1A shows a view obliquely from above of a concrete element intended to be used in a first example not comprised by the present invention,
Figure 1B shows a side view of the concrete element of Figure 1A,
Figure 1C shows a view directly from below of a concrete element according to a first example, wherein the concrete element is provided with a band-shaped resilient spacing means for one or several cables and/or pipelines which is/are to be protected by the concrete element in an underwater installation,
Figure 1D is a gable end view which schematically shows how the band-shaped resilient spacing means passes around the concrete element according to the first example before the laying of the concrete element,
Figure 2 is a gable end view which schematically shows how the band-shaped resilient spacing means according to the first example passes between the concrete element and a pipeline being protected by the concrete element after laying it on top of the pipeline on a surface at the bottom,
Figure 3 shows a cut side view of three concrete elements according to the first example after interconnection,
Figure 4 is a schematic perspective view of a semi-finished concrete element, which can be used for fabricating a concrete element according to a first embodiment of the present invention, wherein the concrete element is shown before mounting connecting members at the ends, but already provided with anchor points for a first resilient spacing means on the sides at one end, and with a recess extending around the outside for receiving, protecting and positionally fixing a portion of a second resilient spacing means at the other end,
Figure 5 shows a view directly from below of a concrete element according to a second example not comprised by the present invention, having two resilient spacing means in the form of cut pieces of material of polystyrene foam fixed to anchor points on the bottom side of the concrete element by means of metal hooks near each end of the concrete element, and
Figure 6 is a gable end view which schematically shows how one of the resilient spacing means of polystyrene foam according to the embodiment shown in Fig. 5 is placed between the concrete element and a pipeline and a cable, respectively, which are protected by the concrete element after laying it on top of the pipeline and cable, respectively, on a surface at the bottom.

### DESCRIPTION OF EMBODIMENTS OF THE INVENTION

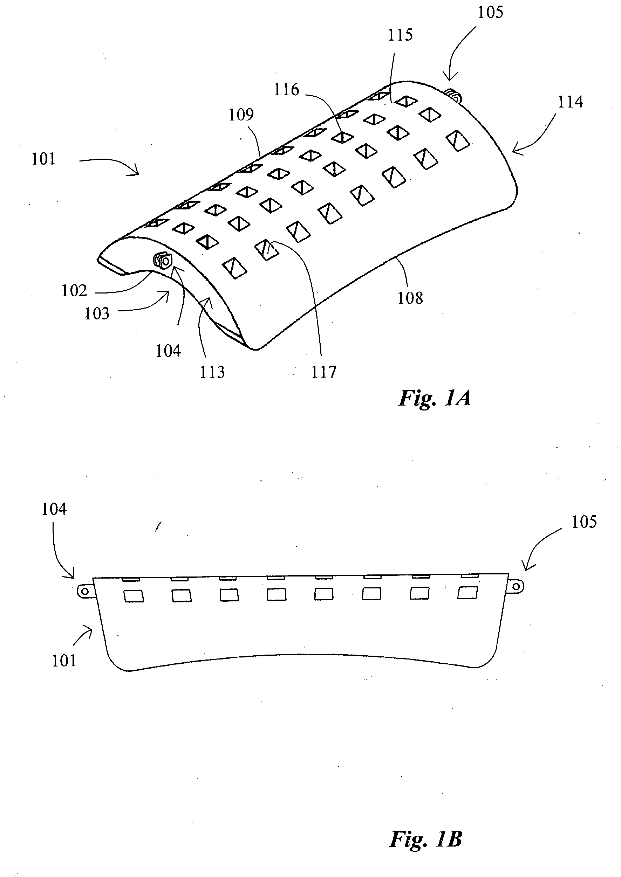

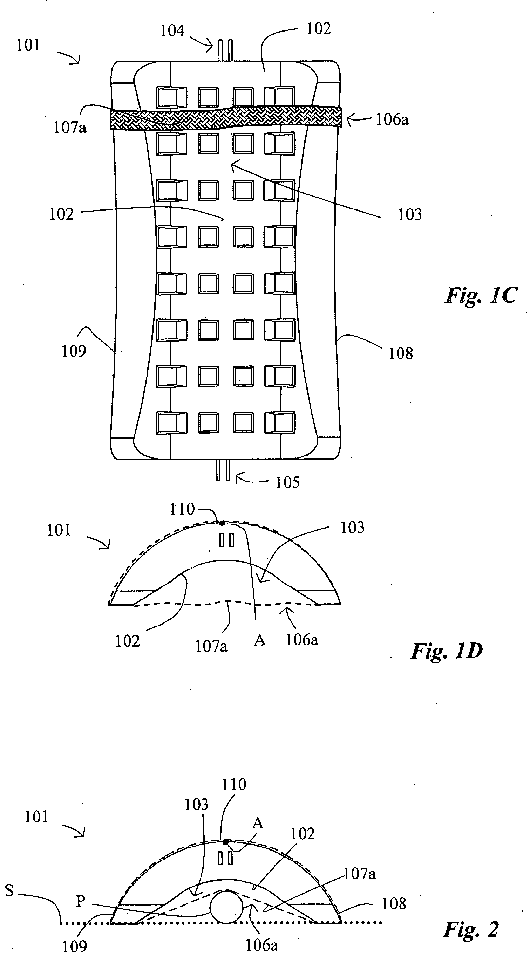

In the following, a number of examples of a concrete element will be described in greater detail with reference to the attached Figures 1A-6.

The concrete element 101, 101', 101"; 201; 301 is intended for protecting one or several cables and/or pipelines in an underwater installation and comprises a bottom side 102; 302 providing a longitudinal cavity 103; 303 for receiving said one or several cables C and/or pipelines P when laying the concrete element. The concrete element 101 is shaped as an elongated, curved shell segment having two gable ends 113, 114, a top side 115 between the gable ends, which is designed for low drag resistance against a trawl or other object dragged over it, after the laying operation, and at least two through-going apertures 116, 117 from the top side 115 to the cavity 103. In order to minimize the risk of a fishing implement getting snagged, it is particularly advantageous that the top side 115 decreases in height from the centre towards the sides 108, 109 and describes a smooth curve shape. A smooth curve shape of the top side also reduces the forces exerted by water movements on the concrete element after the laying operation, and thus also reduces the risk of the concrete element being displaced out of position. In order to facilitate the through-flow of water and to thus further reduce the forces exerted by water movements on the laid concrete element, it is advantageous if the concrete element 101 exhibits a pattern of through-going apertures 116, 117 across the major portion of its surface. Advantageously, in the concrete element 101, the projection of the gable ends 113, 114 is inclined so that the top side 115 becomes longer than the bottom side 102, which creates openings for free through-flow of water between laid concrete elements and further reduces the forces exerted on the laid concrete elements by water movements. Furthermore, the openings between the concrete elements provide passages into the underlying cavity which are suitable for larger marine organisms, such as fish and lobsters.

The concrete element 101; 301 is advantageously provided with at least one connecting member 104, 105; 304, 305 for interconnection with a corresponding connecting member 105", 104' of another concrete element 101", 101' during the laying operation. Advantageously, the connecting members comprise lugs 104, 105 of corrosion resistant metal which can be interconnected by means of connecting elements, such as dowels, bolt-nut connections, pins, or other suitable elements. Such a connecting system enables rapid interconnection of the concrete elements during the laying operation, so that they can be laid in shorter continuous groups, or in a long continuous row, in an efficient manner. However, it is also conceivable with embodiments where the concrete elements lack connecting members and are laid one at a time on top of the installation which is to be protected. The connecting members 104, 105 of the concrete element 101, for interconnection with a corresponding connecting member of another concrete element, have such a design that the space between the outer edges of the gable ends of two interconnected concrete elements becomes smaller than 30 cm, preferably smaller than 20 cm, after the laying operation. Such a small space between the gable ends reduces the risk of a trawl board, or other objects dragged over them, getting stuck between the concrete elements.

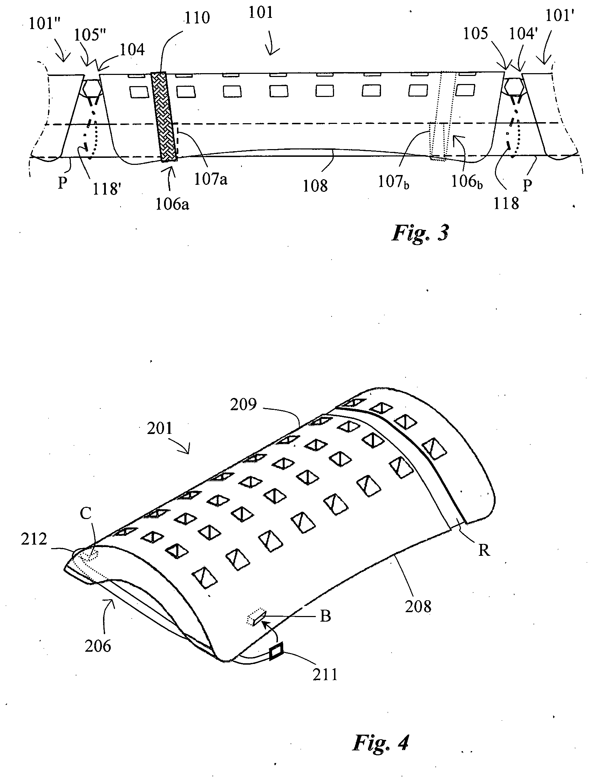

In another example (see Fig. 3), the connecting members 104, 105 of the concrete element 101 are of a design which allows said one or several cables and/or pipelines P to be suspended therefrom and/or fixed thereto via one or several sling means 118, 118' when laying a plurality of concrete elements 101', 101, 101" in a row. It is also conceivable with an embodiment where the concrete element has been provided with other suitably positioned anchor points than the connecting members for such sling means, e.g. hooks or lugs on the bottom side of the concrete element. The use of such sling means 118, 118' is advantageous since it enables a portion of said one or several cables and/or pipelines P to be suspended from and/or fixed to the concrete elements in a simple, inexpensive and rapid manner when laying a plurality of concrete elements 101', 101, 101" in a row. It also enables said one or several cables and/or pipelines to be reliably fixed in position at regular intervals relative to the overlying protective structure of interconnected concrete elements in the completed underwater installation. Another advantage of such a flexible sling suspension is that the cables and/or pipelines can move sufficiently relative to the concrete elements during the laying operation to avoid that they are damaged by excessive tensile or bending forces, or jerks from the concrete elements. At least one resilient spacing means 106a, 106b; 206; 306a, 306b has been designed and applied in such a way on the concrete element 101; 201; 301, before the laying of the concrete element, that an abutment portion 107a, 107b; 307a, 307b of said resilient spacing means extends inside the longitudinal cavity 103; 303 at least a portion of the distance between a first 108; 208; 308 and a second 109; 209; 309 longitudinal side of the concrete element 101; 201; 301, wherein said resilient spacing means is/are intended to pass between said bottom side 102; 302 of the concrete element and said one or several cables C and/or pipelines P after the laying of the concrete element 101; 201; 301. Through such an application of one or several resilient spacing means on the concrete element, the risk of damages to said one or several cables and/or pipelines is reduced considerably, both during and after the laying operation. Preferably, the resiliency, degree of pretensioning, if any, and dimensioning of said resilient spacing means 106a, 106b; 206; 306a, 306b are chosen such that said resilient spacing means will exert a compressive force higher than 300 N/m, as measured on a cable or pipeline of 75 mm outer diameter, and expressed as force measured in N exerted on the cable or pipeline divided by the length in metres of the cable or pipeline on which said spacing means exerts the force with the concrete element resting on a flat support surface. By making sure that the exerted compressive force is at least 300 N/m, it is ensured that the pipelines and/or cables will not move after the laying operation, so that the risk of interruptions in the fluid conveyance brought about by the pipelines is minimized, and so that, in particular, the risk of interruptions in power transmission and/or communication due to bending fatigue of the electrical or optical conductors of the cables is minimized. Advantageously, the resiliency, degree of pretensioning, if any, and dimensioning of said resilient spacing means 106a, 106b; 206; 306a, 306b are chosen such that said resilient spacing means will exert a compressive force below 5000 N/m, as measured on a cable or pipeline of 75 mm outer diameter, and expressed as force measured in N exerted on the cable or pipeline divided by the length in metres of the cable or pipeline on which said spacing means exerts the force with the concrete element resting on a flat support surface. Through the possibility of being able to ensure by measurement that the exerted compressive force does not exceed 5000 N/m, the risk of pipelines and/or cables being damaged by excessive compressive forces exerted by said resilient spacing means is eliminated.

When dimensioning and inspecting concrete elements according to the invention, the exerted compressive force can be measured before the laying operation by placing a piece of cable or pipe underneath a resilient spacing means of a concrete element according to the invention, which is then placed on a suitable flat support surface. Thereafter, the total force exerted on the piece of cable or pipe by the resilient spacing means is measured and divided by the width of the resilient spacing means in the longitudinal direction of the concrete element, i.e. the length of cable or pipe against which the resilient spacing means abuts. The determination of the exerted compressive force can advantageously be performed by placing the concrete element having a spacing means according to the invention on top of a piece of cable or pipe of 75 mm outer diameter, whereupon the force required for lifting the piece of cable or pipe from the support surface at the spacing means is measured. Thereafter, the measured force is divided by the measured width of the spacing means in contact with the piece of cable or pipe.

A resilient spacing means 106a, 106b; 206; 306a, 306b is particularly advantageously dimensioned and adapted to at least substantially span the distance between the inwardly facing surfaces of the first 108; 208; 308 and second 109; 209; 309 longitudinal sides of the concrete element 101 on which the resilient spacing means is to be applied. Such a design minimizes the risk of cables and/or pipelines being damaged by wear or chafing against the inside of the concrete element during and/or after the laying operation.

In a first example (see Figures 1A, 1B, 1C, 1D, 2 and 3) of the concrete element 101 said resilient spacing means 106a, 106b comprises/comprise one or several elongated pieces of material in the form of a band, a belt, a strip, a fabric, a rope, a wire and/or a cord. A resilient spacing means 106a, 106b for application on a concrete element according to the first alternative embodiment can advantageously comprise a woven band of natural and/or synthetic material, and particularly advantageously a PVC coated woven fabric.

In the first example, the resilient spacing means 106a, 106b has an elongated shape and a length sufficient for application in the form of an endless, substantially transverse loop around the concrete element 101 and attachment of an attachment means 110 of said loop to at least one anchor point A on the concrete element.

In a first embodiment of the present invention (see Figure 4) of the concrete element 201 according to the invention, the resilient spacing means 206 has an elongated shape and exhibits a first end having a first attachment means 211 for attachment to a first anchor point B on the first longitudinal side 208 of the concrete element and second end having a second attachment means 212 for attachment to a second anchor point C on the second longitudinal side 209 of the concrete element.

In the first example and in the first embodiment of the invention, the attachment means of the spacing means used for attachment thereof to the anchor points of the concrete elements 101; 201 can advantageously comprise a loop of material wrapped around a rigid object, snap-in means 211, 212, lugs, straps, eyelets 110, apertures, slits, bundling straps and/or Velcro means, whereas the anchor points of the attachment means on or in the concrete elements 101; 201 advantageously can comprise dowels, hooks, lugs, eyelet holders (A), screws, bolts, nuts, washers, apertures, slits, borings, milled-out portions, recesses (B, C) and/or Velcro means.
In one advantageous embodiment (see Figure 4) of the invention, the periphery of the concrete element 201 is provided with at least one recess R for receiving, protecting and positionally fixing a portion of one of said resilient spacing means (not shown in the figure). Such a recess in the concrete element protects the resilient spacing means running in the recess from wear and chafing against objects in the surroundings and contributes to keeping the resilient spacing means in the intended position relative to the concrete element during and after the laying operation.

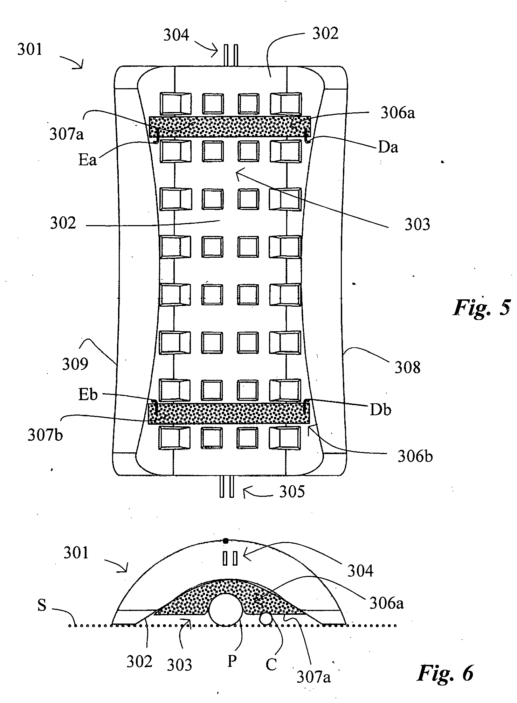

In a second example (see Figures 5 and 6) of the concrete element 301 said resilient spacing means 306a, 306b comprises/comprise one or several cut pieces of material of a sheet- or board-shaped resilient material, particularly advantageously one or several pieces of material 306a, 306b of a foamed or expanded material, which advantageously can be a polystyrene foam, and which alternatively can be a polyethylene, polypropylene or PVC foam. Combinations of several pieces of material of different materials may also be used as resilient spacing means.

In the second example, the concrete element 301 preferably exhibits at least one anchor point Da, Ea, Db, Eb for positionally fixing said resilient spacing means 306a, 306b, and particularly advantageously, the concrete element exhibits at least anchor point comprising at least one dowel, screw, nail, bolt, clip, slit, hook Da, Ea, Db, Eb (see Fig. 5), one or several protrusions and/or one or several means provided with spikes, barbs or nails for engagement with said resilient spacing means 306a, 306b.

In the foregoing, the present invention has been described with the aid of a number of different embodiments and with reference to the attached drawings. It should be understood, however, that the invention is not limited to the described embodiments and to what is shown in drawings, and that also other embodiments are conceivable within the scope of the invention as it is defined by the following claims.

Accordingly, many different designs of the above-described spacing means are conceivable within the scope of the invention, for example spacing means of different materials, of different shapes and dimensions, and with different attachment means for attachment to different types of anchor points of the concrete elements.

The width of the spacing means can be selected for controlling the compressive force which will be exerted on the cables and/or pipelines which are to be protected by the concrete elements and pressed against a surface at the bottom via the spacing means. It has been found that a width of about 100 mm is suitable for most of the intended applications, but also other widths of the spacing means are conceivable, depending, among other things, on the type, material and number of spacing means, and on the type of pipes and/or cables which are to be protected by an interconnected row of laid concrete elements according to the invention in an underwater installation.

## Claims

1. A concrete element for protecting one or several cables and/or pipelines in an underwater installation, wherein said concrete element (101, 101', 101"; 201; 301) comprises a bottom side (102; 302) providing a longitudinal cavity (103; 303) for receiving said one or several cables (C) and/or pipelines (P) when laying the concrete element, wherein at least one resilient spacing means (106a, 106b; 206; 306a, 306b) has been designed and applied in such a way on the concrete element (101; 201; 301), before the laying of the concrete element, that an abutment portion (107a, 107b; 307a, 307b) of said resilient spacing means extends inside the longitudinal cavity (103; 303) at least a portion of the distance between a first (108; 208; 308) and a second (109; 209; 309) longitudinal side of the concrete element (101; 201; 301), wherein said resilient spacing means is/are intended to pass between said bottom side (102; 302) of the concrete element and said one or several cables (C) and/or pipelines (P) after the laying of the concrete element (101; 201; 301),
**characterized in that** said resilient spacing means (206) has/have an elongated shape and exhibits/exhibit a first end having a first attachment means (211) for attachment to a first anchor point (B) on the first longitudinal side (208) of the concrete element and second end having a second attachment means (212) for attachment to a second anchor point (C) on the second longitudinal side (209) of the concrete element.

2. The concrete element according to claim 1,
**characterized in that** the resiliency, degree of pretensioning, if any, and dimensioning of said resilient spacing means (106a, 106b; 206; 306a, 306b) are chosen such that said resilient spacing means will exert a compressive force higher than 300 N/m, as measured on a cable or pipeline of 75 mm outer diameter, and expressed as force measured in N exerted on the cable or pipeline divided by the length in metres of the cable or pipeline on which said spacing means exerts the force with the concrete element resting on a flat support surface.

3. The concrete element according to claim 1 or 2,
**characterized in that** the resiliency, degree of pretensioning, if any, and dimensioning of said resilient spacing means (106a, 106b; 206; 306a, 306b) are chosen such that said resilient spacing means will exert a compressive force below 5000 N/m, as measured on a cable or pipeline of 75 mm outer diameter, and expressed as force measured in N exerted on the cable or pipeline divided by the length in metres of the cable or pipeline on which said spacing means exerts the force with the concrete element resting on a flat support surface.

4. The concrete element according to any one of the claims 1-3,
**characterized in that** said resilient spacing means (106a, 106b; 206; 306a, 306b) is/are dimensioned and adapted to at least substantially span the distance between the inwardly facing surfaces of said first (108; 208; 308) and second (109; 209; 309) longitudinal sides.

5. The concrete element according to any one of the claims 1-4,
**characterized in that** said resilient spacing means (106a, 106b; 206) comprises/comprise one or several elongated pieces of material in the form of a band, a belt, a strip, a fabric, a rope, a wire and/or a cord.

6. The concrete element according to any one of the claims 1-5,
**characterized in that** said resilient spacing means (106a, 106b; 206) comprises/comprise a PVC coated woven fabric.

7. The concrete element according to claim 1,
**characterized in that** said attachment means of said resilient spacing means comprises/comprise a loop of material wrapped around a rigid object, snap-in means (211, 212), lugs, straps, eyelets (110), apertures, slits and/or bundling straps.

8. The concrete element according to any one of the preceding claims,
**characterized in that** the periphery of the concrete element (201) is provided with at least one recess (R) for receiving, protecting and positionally fixing a portion of one of said resilient spacing means.

9. The concrete element according to any one of the preceding claims, wherein said concrete element (101) is shaped as an elongated, curved shell segment having two gable ends (113, 114), a top side (115) between the gable ends which is designed for low drag resistance against a trawl or other object dragged over it after the laying operation, and at least two through-going apertures (116, 117) from the top side (115) to the cavity (103), wherein the concrete element is provided with at least one connecting member (104, 105) for interconnection with a corresponding connecting member (105", 104') of another concrete element (101", 101') during the laying operation,
**characterized in that** the projection of the gable ends (113, 114) is inclined so that the top side (115) becomes longer than the bottom side (102), and that the connecting members (104, 105) for interconnection with a corresponding connecting member of another concrete element are of such a design that the space between the outer edges of the gable ends of two interconnected concrete elements becomes smaller than 30 cm, preferably smaller than 20 cm, after the laying operation.

10. The concrete element according claim 9, **characterized in that** the top side (115) decreases in height from the centre towards the sides (108, 109), and describes a smooth curve shape.

11. The concrete element according to any one of the preceding claims, **characterized in that** the concrete element (101) exhibits a pattern of through-going apertures (116, 117) across the major portion of its surface.

## Patentansprüche

1. Betonelement für den Schutz von einem/einer oder mehreren Kabel(n) und/oder Rohrleitung(en) in einer Unterwasserinstallation, wobei das Betonelement (101, 101', 101"; 201; 301) eine Unterseite (102; 302) umfasst, die eine Längsaushöhlung (103; 303) zum Aufnehmen des/der einen oder der mehreren Kabel(s) (C) und/oder Rohrleitung(en) (P) bereitstellt, wenn das Betonelement verlegt wird, wobei mindestens ein elastisches Abstandsmittel (106a, 106b; 206; 306a, 306b) vor dem Verlegen des Betonelements so ausgestaltet und an dem Betonelement (101; 201; 301) angebracht wurde, dass ein Anlageabschnitt (107a, 107b; 307a, 307b) des bzw. der elastischen Abstandsmittel(s) in der Längsaushöhlung (103; 303) über zumindest einen Teil der Strecke zwischen einer ersten (108; 208; 308) und einer zweiten (109; 209; 309) Längsseite des Betonelements (101; 201; 301) verläuft, wobei das bzw. die elastische(n) Abstandsmittel nach dem Verlegen des Betonelements (101; 201; 301) zwischen der Unterseite (102; 302) des Betonelements und dem/der einen oder den mehreren Kabel(n) (C) und/oder Rohrleitung(en) (P) verlaufen soll bzw. sollen,
**dadurch gekennzeichnet, dass** das bzw. die elastische(n) Abstandsmittel (206) eine längliche Form aufweist bzw. aufweisen und ein erstes Ende mit einem ersten Befestigungsmittel (211) zum Befestigen an einem ersten Verankerungspunkt (B) an der ersten Längsseite (208) des Betonelements und ein zweites Ende mit einem zweiten Befestigungsmittel (212) zum Befestigen an einem zweiten Verankerungspunkt (C) an der zweiten Längsseite (209) des Betonelements besitzt bzw. besitzen.

2. Betonelement nach Anspruch 1,
**dadurch gekennzeichnet, dass** die Elastizität, gegebenenfalls der Grad der Vorspannung sowie die Abmessungen des bzw. der elastischen Abstandsmittel(s) (106a, 106b; 206; 306a, 306b) derart ausgewählt sind, dass das bzw. die elastische(n) Abstandsmittel eine Druckkraft von über 300 N/m ausübt bzw. ausüben, gemessen auf ein Kabel oder eine Rohrleitung mit einem Außendurchmesser von 75 mm und ausgedrückt als in N gemessene Kraft, die auf das Kabel oder die Rohrleitung ausgeübt wird, geteilt durch die Länge des Kabels oder der Rohrleitung in Metern, auf das bzw. die das bzw. die Abstandsmittel die Kraft ausübt bzw. ausüben, wenn das Betonelement auf einer ebenen Tragfläche liegt.

3. Betonelement nach Anspruch 1 oder 2,
**dadurch gekennzeichnet, dass** die Elastizität, gegebenenfalls der Grad der Vorspannung sowie die Abmessungen des bzw. der elastischen Abstandsmittel(s) (106a, 106b; 206; 306a, 306b) derart ausgewählt sind, dass das bzw. die elastische(n) Abstandsmittel eine Druckkraft von unter 5000 N/m ausübt bzw. ausüben, gemessen auf ein Kabel oder eine Rohrleitung mit einem Außendurchmesser von 75 mm und ausgedrückt als in N gemessene Kraft, die auf das Kabel oder die Rohrleitung ausgeübt wird, geteilt durch die Länge des Kabels oder der Rohrleitung in Metern, auf das bzw. die das bzw. die Abstandsmittel die Kraft ausübt bzw. ausüben, wenn das Betonelement auf einer ebenen Tragfläche liegt.

4. Betonelement nach einem der Ansprüche 1 bis 3,
**dadurch gekennzeichnet, dass** das bzw. die elastische(n) Abstandsmittel (106a, 106b; 206; 306a, 306b) so bemessen und ausgelegt ist bzw. sind, dass die Strecke zwischen den nach innen weisenden Flächen der ersten (108; 208; 308) und zweiten (109; 209; 309) Längsseite zumindest im Wesentlichen überspannt wird.

5. Betonelement nach einem der Ansprüche 1 bis 4,
**dadurch gekennzeichnet, dass** das bzw. die elastische(n) Abstandsmittel (106a, 106b; 206) ein oder mehrere längliche Materialstück(e) in Form eines Bands, eines Gurts, eines Streifens, eines Textilerzeugnisses, eines Seils, eines Drahts und/oder eines Stricks umfasst bzw. umfassen.

6. Betonelement nach einem der Ansprüche 1 bis 5,
**dadurch gekennzeichnet, dass** das bzw. die elastische(n) Abstandsmittel (106a, 106b; 206) ein mit PVC beschichtetes Gewebe umfasst bzw. umfassen.

7. Betonelement nach Anspruch 1,
**dadurch gekennzeichnet, dass** das bzw. die Befestigungsmittel des bzw. der elastischen Abstandsmittel(s) eine um ein steifes Objekt herum gewickelte Materialschlaufe, Einrastmittel (211, 212), Laschen, Bänder, Ösen (110), Öffnungen, Schlitze und/oder Bündelbänder umfasst bzw. umfassen.

8. Betonelement nach einem der vorhergehenden Ansprüche,
**dadurch gekennzeichnet, dass** der Umfang des Betonelements (201) mit mindestens einer Vertiefung (R) zum Aufnehmen, Schützen und Positionsfixieren eines Abschnitts von einem der elastischen Abstandsmittel versehen ist.

9. Betonelement nach einem der vorhergehenden Ansprüche, wobei das Betonelement (101) als längliches, gebogenes Hüllensegment geformt ist, das zwei Giebelenden (113, 114), eine Oberseite (115) zwischen den Giebelenden, die für einen geringen Schleppwiderstand gegenüber einem Schleppnetz oder einem anderen Objekt, das nach dem Verlegevorgang darüber gezogen wird, ausgestaltet ist, sowie mindestens zwei von der Oberseite (115) aus zur Aushöhlung (103) durchgehenden Öffnungen (116, 117) aufweist, wobei das Betonelement mit mindestens einem Verbindungselement (104, 105) zum Verbinden mit einem entsprechenden Verbindungselement (105", 104') eines weiteren Betonelements (101", 101') während des Verlegevorgangs versehen ist,
**dadurch gekennzeichnet, dass** die Auskragung der Giebelenden (113, 114) geneigt ist, sodass die Oberseite (115) länger als die Unterseite (102) wird, und dass die Verbindungselemente (104, 105) für die Verbindung mit einem entsprechenden Verbindungselement eines weiteren Betonelements derart ausgestaltet sind, dass der Zwischenraum zwischen den Außenkanten der Giebelenden von zwei miteinander verbundenen Betonelementen nach dem Verlegevorgang kleiner als 30 cm, vorzugsweise kleiner als 20 cm wird.

10. Betonelement nach Anspruch 9,
**dadurch gekennzeichnet, dass** die Oberseite (115) von der Mitte zu den Seiten (108, 109) hin in der Höhe niedriger wird und eine glatte Kurvenform beschreibt.

11. Betonelement nach einem der vorhergehenden Ansprüche,
**dadurch gekennzeichnet, dass** das Betonelement (101) ein Muster aus durchgehenden Öffnungen (116, 117) über den Großteil seiner Fläche besitzt.

## Revendications

1. Élément de béton destiné à protéger un ou plusieurs câbles et/ou canalisations dans une installation sous-marine, ledit élément de béton (101, 101', 101" ; 201 ; 301) comprenant une face inférieure (102 ; 302) fournissant une cavité longitudinale (103 ; 303) pour recevoir lesdits un ou plusieurs câbles (C) et/ou canalisations (P) lors de la pose de l'élément de béton, au moins un moyen d'écartement résilient (106a, 106b ; 206 ; 306a, 306b) ayant été conçu et appliqué de telle manière sur l'élément de béton (101 ; 201 ; 301), avant la pose de l'élément de béton, qu'une partie de butée (107a, 107b ; 307a, 307b) dudit/desdits moyen(s) d'écartement résilient(s) s'étend à l'intérieur de la cavité longitudinale (103 ; 303) au moins sur une partie de la distance entre un premier (108 ; 208 ; 308) et un second (109 ; 209 ; 309) côté longitudinal de l'élément de béton (101 ; 201 ; 301), ledit/lesdits moyen(s) d'écartement résilient(s) étant destiné(s) à passer entre ladite face inférieure (102 ; 302) de l'élément de béton et lesdits un ou plusieurs câbles (C) et/ou canalisations (P) après la pose de l'élément de béton (101 ; 201 ; 301),
**caractérisé en ce que** ledit/lesdits moyen(s) d'écartement résilient(s) (206) a/ont une forme allongée et présente(nt) une première extrémité comportant un premier moyen de fixation (211) pour la fixation à un premier point d'ancrage (B) sur le premier côté longitudinal (208) de l'élément de béton et une seconde extrémité comportant un second moyen de fixation (212) pour la fixation à un second point d'ancrage (C) sur le second côté longitudinal (209) de l'élément de béton.

2. Élément de béton selon la revendication 1,
**caractérisé en ce que** la résilience, le degré de précontrainte, le cas échéant, et le dimensionnement dudit/desdits moyen(s) d'écartement résilient(s) (106a, 106b ; 206 ; 306a, 306b) sont choisis de telle sorte que ledit/lesdits moyen(s) d'écartement résilient(s) exercera/exerceront une force de compression supérieure à 300 N/m, mesurée sur un câble ou une canalisation de 75 mm de diamètre extérieur, et exprimée comme force mesurée en N exercée sur le câble ou la canalisation divisée par la longueur en mètres du câble ou de la canalisation sur lequel/laquelle ledit/lesdits moyen(s) d'écartement exerce(nt) la force, avec l'élément de béton reposant sur une surface de support plane.

3. Élément de béton selon la revendication 1 ou 2,
**caractérisé en ce que** la résilience, le degré de précontrainte, le cas échéant, et le dimensionnement dudit/desdits moyen(s) d'écartement résilient(s) (106a, 106b ; 206 ; 306a, 306b) sont choisis de telle sorte que ledit/lesdits moyen(s) d'écartement résilient(s) exercera/exerceront une force de compression inférieure à 5000 N/m, mesurée sur un câble ou une canalisation de 75 mm de diamètre extérieur, et exprimée comme force mesurée en N exercée sur le câble ou la canalisation divisée par la longueur en mètres du câble ou de la canalisation sur lequel/laquelle ledit/lesdits moyen(s) d'écartement exerce(nt) la force, avec l'élément de béton reposant sur une surface de support plane.

4. Élément de béton selon l'une quelconque des revendications 1 à 3,
**caractérisé en ce que** ledit/lesdits moyen(s) d'écartement résilient(s) (106a, 106b ; 206 ; 306a, 306b) est/sont dimensionné(s) et adapté(s) pour franchir au moins essentiellement la distance entre les surfaces tournées vers l'intérieur desdits premier (108 ; 208 ; 308) et second (109 ; 209 ; 309) côtés longitudinaux.

5. Élément de béton selon l'une quelconque des revendications 1 à 4,
**caractérisé en ce que** ledit/lesdits moyen(s) d'écartement résilient(s) (106a, 106b ; 206) comprend/comprennent un ou plusieurs morceaux allongés de matériau sous la forme d'un ruban, d'une ceinture, d'une bande, d'une étoffe, d'une corde, d'un fil métallique et/ou d'un cordon.

6. Élément de béton selon l'une quelconque des revendications 1 à 5,
**caractérisé en ce que** ledit/lesdits moyen(s) d'écartement résilient(s) (106a, 106b ; 206) comprend/comprennent une étoffe tissée enduite de PVC.

7. Élément de béton selon la revendication 1,
**caractérisé en ce que** ledit/lesdits moyen(s) de fixation dudit/desdits moyen(s) d'écartement résilient(s) comprend/comprennent une boucle de matériau enroulée autour d'un objet rigide, des moyens d'encliquetage (211, 212), des pattes, des sangles, des oeillets (110), des orifices, des fentes et/ou des sangles d'attache.

8. Élément de béton selon l'une quelconque des revendications précédentes,
**caractérisé en ce que** la périphérie de l'élément de béton (201) est dotée d'au moins un évidement (R) pour recevoir, protéger et fixer en position une partie d'un desdits moyens d'écartement résilients.

9. Élément de béton selon l'une quelconque des revendications précédentes, dans lequel ledit élément de béton (101) est formé comme segment d'enveloppe courbe allongé comportant deux extrémités en pignon (113, 114), une face supérieure (115) entre les extrémités en pignon, qui est conçue pour une faible résistance à la traînée par rapport à un chalut ou un autre objet traîné sur celle-ci après l'opération de pose, et au moins deux orifices traversants (116, 117) de la face supérieure (115) à la cavité (103), l'élément de béton étant doté d'au moins un élément de liaison (104, 105) pour la liaison avec un élément de liaison correspondant (105", 104") d'un autre élément de béton (101", 101') pendant l'opération de pose,
**caractérisé en ce que** la projection des extrémités en pignon (113, 114) est inclinée de telle sorte que la face supérieure (115) devient plus longue que la face inférieure (102), et **en ce que** les éléments de liaison (104, 105) pour la liaison avec un élément de liaison correspondant d'un autre élément de béton sont conçus de telle manière que l'écart entre les bords extérieurs des extrémités en pignon de deux éléments de béton liés entre eux devient inférieur à 30 cm, de préférence inférieur à 20 cm, après l'opération de pose.

10. Élément de béton selon la revendication 9,
**caractérisé en ce que** la face supérieure (115) diminue en hauteur du centre vers les côtés (108, 109), et décrit une forme de courbe lissée.

11. Élément de béton selon l'une quelconque des revendications précédentes,
**caractérisé en ce que** l'élément de béton (101) présente un motif d'orifices traversants (116, 117) à travers la majeure partie de sa surface.
